# EUROPEAN PATENT SPECIFICATION

(11) **EP 1 660 258 B1**
(45) Date of publication and mention of the grant of the patent: **19.09.2007**
(21) Application number: 04782165.7
(22) Date of filing: 26.08.2004
(51) Int. Cl.: B21K 1/00, B21K 3/00, F01L 1/18

(54) **A METHOD FOR FORMING A CAM-ENGAGED ROCKER ARM**
VERFAHREN ZUR HERSTELLUNG EINER NOCKEN-EINGRIFFS-KURBELSCHWINGE
PROCEDE POUR FORMER UN CULBUTEUR A CONTACT DE CAME

(30) Priority: 27.08.2003 US 498076 P
(43) Date of publication of application: 31.05.2006
(73) Proprietor: Gen Tek Technologies Marketing, Inc., Parsipanny, New Jersey 07054 (US)
(72) Inventor: SMITH, Scott, P., Temperance, MI 48182 (US); MILLS, Dan, Maumee, OH 43537 (US); JENNINGS, Aric, New Bern, NC 28562 (US); PRYBA, Stanley, J., Holland, OH 34528 (US)
(74) Representative: Heusler, Wolfgang
(86) International application number: PCT/US2004/027611
(87) International publication number: WO 2005/021183

(56) References cited:
- EP-A- 1 057 980
- EP-A- 1 122 408
- DE-A- 10 030 341
- PATENT ABSTRACTS OF JAPAN vol. 2000, no. 22, 9 March 2001 (2001-03-09) -& JP 2001 129633 A (NAKANISHI METAL WORKS CO LTD), 15 May 2001 (2001-05-15)
- PATENT ABSTRACTS OF JAPAN vol. 2000, no. 01, 31 January 2000 (2000-01-31) -& JP 11 270312 A (NAKANISHI METAL WORKS CO LTD), 5 October 1999 (1999-10-05)

## Description

The present invention relates to a method of forming a rocker arm including a valve guide. In particular, the invention relates to using a stamping die having a pair of cavities to form the valve guides of the rocker arm.

### Background of the Invention

In automotive and other applications, an overhead cam engine typically utilizes a plurality of cam engaged rocker arms to open valves. These rocker arms pivot at one end, contact the valve at an opposite end, and support a roller between the two ends. The roller engages the cam and the cam rotates to move the roller, thereby causing the rocker arm to pivot at a pivot end, and push the valve.

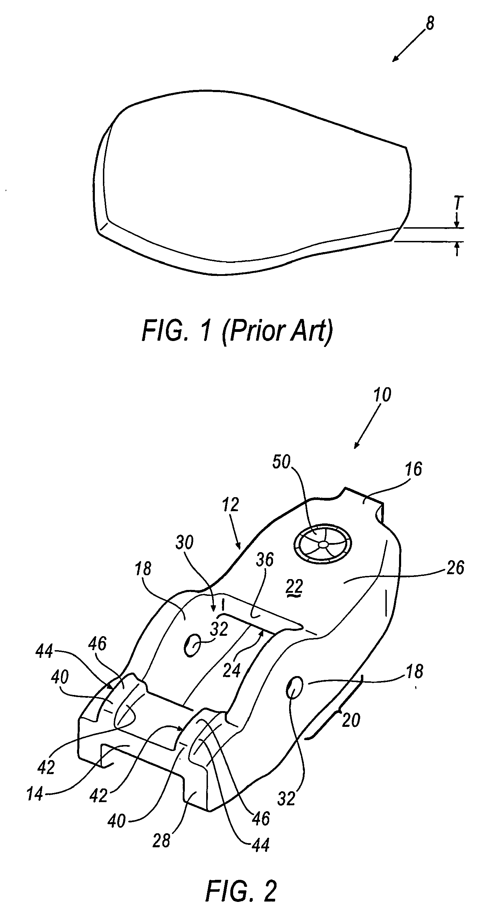

Rocker arms can be manufactured by casting metals, blanking and forming, ceramic molding, and other methods. Stamping a metal blank to form a cam-engaged rocker arm including a valve stem guide is common in the art. The valve stem guides of the rocker arms are typically formed using a punch and cavity, folding or coining process. During the coining process, an upper die and a lower die punch an area of the metal blank to plastically deform the metal blank. Generally, the area of the metal blank being coined has a thickness greater than the remaining metal blank, thereby providing additional material to use in forming the valve guides. Figure 1 illustrates a typical metal blank 8 used in the manufacture of a cam-engaged rocker arm. The metal blank 8 illustrated is of uniform thickness and is folded by turning up two opposing edges, and valve guides are formed by plastically deforming material to the desired locations. This plastic deformation typically moves material from nearby areas of the blank to build up a valve guide. In this forming operation, the thickness of the blank area that lost material may be below a desired minimum thickness. A desired minimum thickness for a rocker arm must be maintained for purposes of strength and durability after a surface hardening treatment even if some of the material of the blank is used to form valve guides.

One drawback to this method is the extreme difficulty in providing a blank with sufficient thickness in a desired area for forming the valve guides without making a remaining portion of the rocker arm too thin in a later forming operation. In practice, it has been found to be nearly impossible to balance these competing needs.

EP 1 122 408 A discloses a method of manufacturing a valve actuating rocker from a metal blank, including the step of thickening the wall of the blank at the region between the valve guides by compressing peripheral ear portions of the blank so that the material thereof plastically flows toward the region to be thickened and an intermediate article is produced having an outline substantially equal to that of the blank without the ears. The thickened part is thereafter punched in order to form two spaced valve guides.

### Summary of the Invention

The present invention overcomes the deficiencies of the prior art by preparing a blank of generally uniform thickness for forming the valve guides of a rocker arm. In one embodiment, a method and system for forming a cam-engaged rocker includes a stamping process where metal is forced into die cavities to build up material in a desired area of a blank to create an intermediate article. The intermediate article is further formed by a shaving process where the built-up material and additional material is formed into a pair of valve guides for the rocker arm.

### Brief Description of the Drawings

Figure 1 is a top view of a prior art metal blank used for forming a cam- " engaged rocker arm.

Figure 2 is a perspective view of a cam engaged rocker arm formed in accordance with an embodiment of the present invention.

Figure 3 is a sectional side view of the rocker arm of Figure 1.

Figure 4 is a top view of a metal blank before forming a cam-engaged rocker arm according to an embodiment of the present invention.

Figure 5 is a top view of an intermediate article after undergoing a first stamping process according to an embodiment of the present invention.

Figure 6 is a perspective view of a further intermediate article according to an embodiment of the present invention, after undergoing a further stamping operation to form side walls.

Figure 7 is a front view of the further intermediate article of Figure 6 illustrating the die used for pinch forming valve guides according to an embodiment of the present invention.

Figure 8 is a front view similar to Figure 7, but illustrating the die after pinch forming the valve guides.

Figure 9 is a top view of an alternate embodiment of the metal blank of Figure 4.

### Description of the Preferred Embodiment

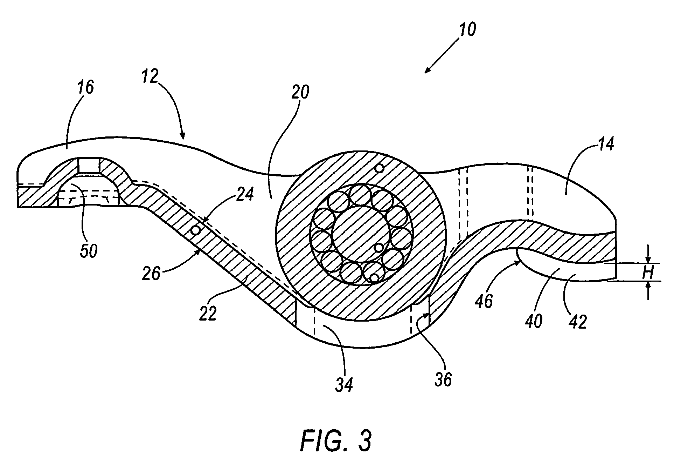

Referring to Figures 2 and 3, a rocker arm 10 is illustrated to include a metal body 12, a valve end 14, a pivot end 16, sidewalls 18, a central portion 20 located between the valve end 14 and the pivot end 16, and a bridge, or cross member, 22 extending between sidewalls 18. Metal body 12 is defined by an upper surface 24, a lower surface 26, and an outer peripheral surface 28. As illustrated, central portion 20 has a central aperture 30 and roller apertures 32 formed therein. Central aperture 30 is defined by an inner surface 34. Roller apertures 32 are defined by roller aperture surfaces 36. Valve end 14 includes valve guides 40 extending from lower surface 26. Each valve guide 40 is defined, at least in part, by an inboard surface 42, an outboard surface 44, and a distal surface 46. A pair of shaved areas, S, are illustrated on lower surface 26, intersecting outboard surfaces 44. Valve guides 40 are illustrated to have a height H, measured perpendicular to lower surface 26, between distal surface 46 and lower surface 26. As best seen in Figure 3, inboard surfaces 42 are separated by a distance. With continued reference to Figures 2 and 3, the pivot end 16 includes a cup 50 formed therein and adapted to rotate on a pivot (not shown).

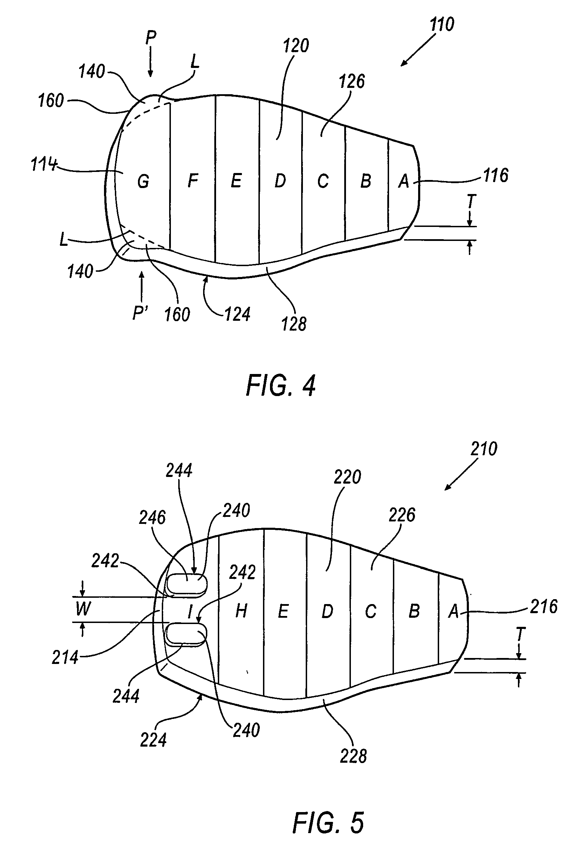

Referring now to Figure 4, a metal blank 110 is shown according to an embodiment of the present invention. As illustrated, metal blank 110 has a valve end 114, a pivot end 116, and a central portion 120 located between the valve end 114 and the pivot end 116. The metal blank 110 has an upper surface 124, a lower surface 126, and an outer surface 128. Upper surface 124 and lower surface 126, as illustrated, are preferably identical in outline. The metal blank 110 has a substantially uniform cross-sectional thickness T as measured between the upper surface 124 and the lower surface 126. The metal blank 110 includes an additional material volume, forming ears 140, about the valve end 114. The ears 140 include the volume circumscribed by a Line L, the outer surface 128, upper surface 124, and lower surface 126, adjacent valve end 114, and define an outboard portion 160 of the metal blank 110. Metal blank 110 is segmented into zones A, B, C, D, E, F, and G, each having a thickness T, as discussed below.

Figure 5 illustrates an intermediate article 210. As illustrated, metal intermediate article 210 has a valve end 214, a pivot end 216, and a central portion 220 located between the valve end 214 and the pivot end 216. The intermediate article 210 has an upper surface 224, a lower surface 226, and an outer surface 228. The intermediate article 210 has a substantially uniform cross-sectional thickness T as measured between the upper surface 224 and the lower surface 226. Intermediate article 210 is shown to include projections 240 defined, at least in part, by an inboard surface 242, an outboard surface 244, and a distal surface 246. As illustrated, inboard surfaces 242 are separated by a distance W. Intermediate article 210 is segmented into zones A, B, C, D, E, H, and I. Zones A, B, C, D, E, and H, each have a thickness T substantially equal to the thickness of metal blank 110. Zone I differs from Zone G in that Zone I has projections 240 and Zone G has ears 140. Peripheral surface 228, viewed along the Z-axis, closely approximates the outline of the metal blank 110 without ears 140, as defined by peripheral surface 128 and Lines L. Thus provided, the metal blank 110 of Figure 4 can be formed into the intermediate article 210 of Figure 5, as described below. As illustrated, Zones A, B, C, D, and E of metal blank 110 and intermediate article 210 are substantially identical. Zone G contains ears 140 that are plastically deformed, by a Force P and resulting Force P' (Figure 4), inward toward each other to produce a resulting Zone I. Zones F and H are preferably identical, although Zone H may be slightly distorted with respect to Zone F as a result of the forming operation described herein.

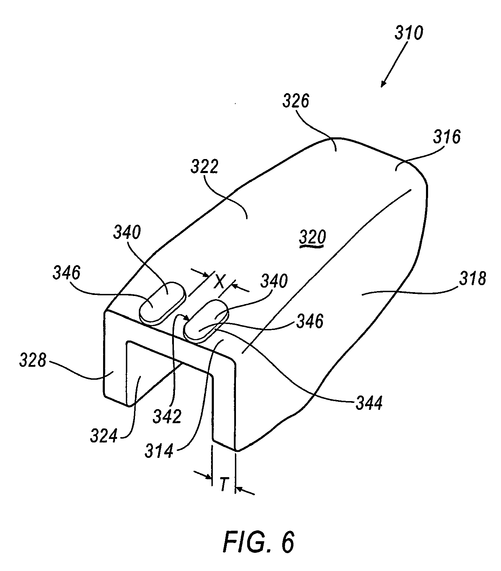

With reference to Figure 6, a further formed intermediate article 310 in the manufacture of rocker arm 10 is illustrated to include a valve end 314, a pivot end 316, and a central portion 320 located between the valve end 314 and the pivot end 316. The further formed intermediate article 310 has an upper surface 324, a lower surface 326, and an outer surface 328. The further formed intermediate article 310 has a substantially uniform cross-sectional thickness T as measured between the upper surface 324 and the lower surface 326. Preferably, thickness T does not vary between rocker arm 10, metal blank 110, intermediate article 210, and further formed intermediate article 310. Further formed intermediate article 310 is shown to include sidewalls 318, a cross member 322, and projections 340 defined, at least in part, by an inboard surface 342, an outboard surface 344, and a distal surface 346. As illustrated, inboard surfaces 342 are separated by a Distance X. Preferably, Distance X is substantially equal to Distance W, although a slight variation between these distances caused by the forming operations described herein may be experienced. In the embodiment illustrated, sidewalls 318 are about identical in outline to sidewalls 18.

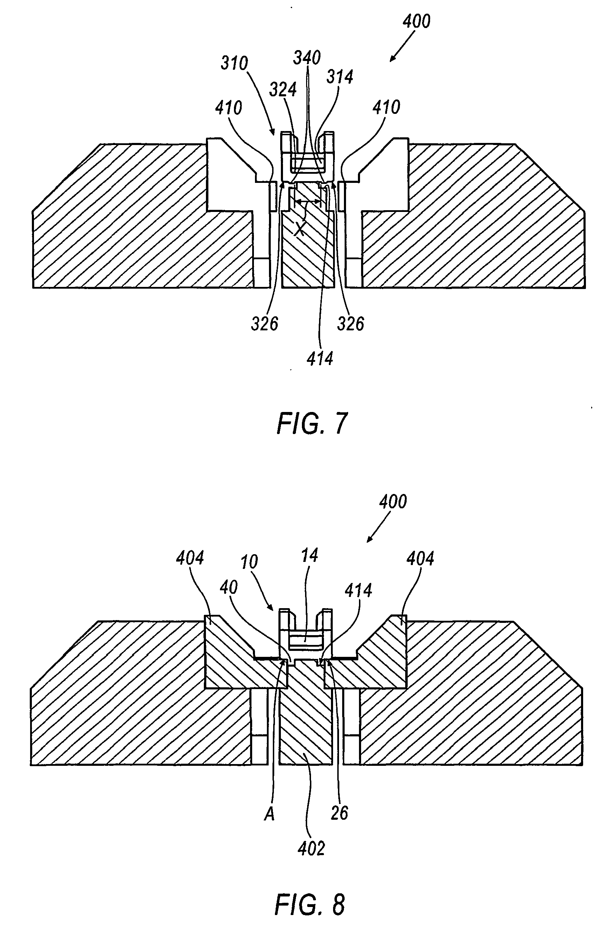

Referring now to Figures 7 and 8, an embodiment of a stamping die 400 for forming valve guides 40 is illustrated to include a center post 402, a pair of cams 404 having a shaving edge 410. Center post 402 is illustrated to include a valve guide forming surface 414. Shaving edge 410 is preferably curved to match the curve of the intersecting line between valve guide 40 and lower surface 26, as best seen in Figure 3. As illustrated in Figure 7, stamping die 400 has a further formed intermediate article 310 positioned therein and prepared for a shaving operation to create valve guides 40. As illustrated in Figure 8, stamping die 400 has one rocker arm 10 positioned therein after the shaving operation has formed valve guides 40.

An embodiment of the method of forming the rocker arm 10 from metal blank 110 will now be described. The metal blank 110 undergoes a first stamping process in which a stamping die (not shown), having a pair of cavities (not shown) which are used to form the projections 240 of intermediate article 210. The cavities of the stamping die are centrally located about the valve end 14 of the metal blank 110. The metal blank 110 is stamped such that during the stamping process, the ears 140 from the outboard portion 160 of the metal blank 110 are forced inward toward the cavities of the stamping die, thereby displacing material adjacent lower surface 126 into the cavities to form projections 240 (Figure 5). Projections 240 are formed by drawing the ears 140 from the outboard portion 160 while minimizing any change to the cross-sectional thickness of the intermediate article 210 that does not include projections 240. The ears 140 are driven inward, plastically deforming material of metal blank 110 into the pair of cavities of the stamping die, producing projections 240. Preferably, each ear 140 produces a projection 240 during this forming operation. Thus formed, intermediate article 210 has an identical outline defined by outer surface 228 as outer surface 128 of metal blank 110 with the exclusion of the ears 140. Thus, the material volume of ears 140 is about equal to the material volume of the projections 240.

At the completion of this stamping step, projections 240 are positioned within the cavities due to the plastic flow of material from metal blank 110. Figure 5 best illustrates the intermediate article 210 after the first stamping process has been completed.

A further processing step of the method presented herein involves the forming of sidewalls 18. In this step, the intermediate article 210 of Figure 5 is formed into the further formed intermediate article 310 of Figure 6 by a folding operation. This folding operation forms sidewalls 318 by folding the sides of further formed intermediate article 310 about 90° toward upper surface 324 along the length of further formed intermediate article 310 from valve end 314 to pivot end 316.

As illustrated in Figure 7, the further formed intermediate article 310 of Figure 6 undergoes a shaving process to form valve guides 40. The shaving process is performed by pinching material between upper surface 324 and lower surface 326 between the cams 404 and shaving the material toward the center post 402. As the material is shaved, the material is plastically deformed toward projections 340, plastically deforming the material of projections 340, until both volumes of material are formed into each valve guide 40. This shaving process creates a shaved area S, that is defined by the material of lower surface 26 that was exposed by the shaving process. As best seen in Figure 7, distance X, between projections 340 of further formed intermediate article 310 is greater than the width of center post 402 adjacent lower surface 326. In this manner, further formed intermediate article 310 can be positioned within die 400 without having to force further formed intermediate article 310 into position. In an alternate embodiment, inboard surfaces 342 may be angled such that their orientation toward lower surface 326 is less than 90°, and the distance between distal surfaces 346 is greater than the minimum distance between projections 340, thereby eliminating any difficulty of interfering surfaces when positioning further formed intermediate article within die 400.

The shaving process results in a minimum of approximately 65% of stock thickness being maintained across the shaved area A so as not to create a through harden heat treat condition in the shaved area. The stock thickness is the original thickness of metal blank 110 as measured from upper surface 24 to lower surface 26. This stock thickness is preferably about 3 mm (0.12 inch) to about 3.94 mm (0.16 inch). It is desired to maintain a minimum thickness of the resulting rocker arm in the shaved area A, as measured between the shaved area A and the upper surface 24. The minimum required thickness for rocker arm 10 adjacent shaved area A is determined by the depth of hardening experienced by rocker arm 10 in a post-forming hardening treatment and the desired soft core thickness. A rocker arm with a hardened surface and soft core is typically desired for purposes of durability and wear resistance. In the embodiment shown, the post forming hardening treatment will harden the rocker arm 10 to a maximum depth of about 0.020 inches measured from all surfaces.

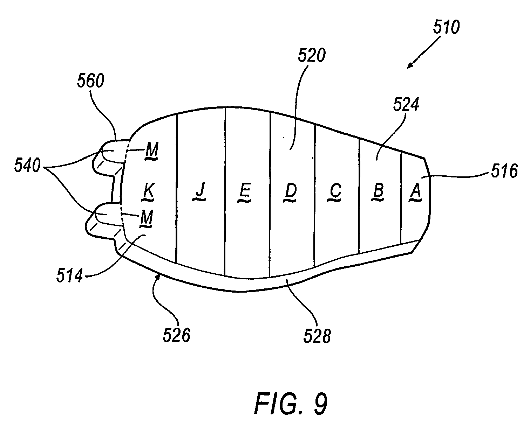

Figure 9 illustrates a metal blank 510 as an alternate embodiment of the metal blank 110. As illustrated, metal blank 510 has a valve end 514, a pivot end 516, and a central portion 520 located between the valve end 514 and the pivot end 516. The metal blank 510 has an upper surface 524, a lower surface 526, and an outer surface 528. Upper surface 524 and lower surface 526, as illustrated, are preferably identical in outline. The metal blank 510 has a substantially uniform cross-sectional thickness T as measured between the upper surface 524 and the lower surface 526. The metal blank 510 includes an additional material volume, forming ears 540, about the valve end 514. The ears 540 include the volume circumscribed by a Line M, the outer surface 528, upper surface 524, and lower surface 526, adjacent valve end 514, and define an outboard portion 560 of the metal blank 510. Metal blank 510 is segmented into zones A, B, C, D, E, J, and K, each having a thickness T.

Metal blank 510 is formed into intermediate article 210 by forcing ears 540 into the valve end 514 as metal plastically flows into the cavities forming projections 240, as discussed herein. Preferably, each ear 540 produces a projection 240 on Zone K at valve end 514 during this forming operation.

Cup 50 and central aperture 30 may be formed in lower surface 26 at any appropriate time when processing metal blank 110 into the rocker arm 10. As presently preferred, central aperture 30 is formed and cup 50 is formed as the last forming step, after pinch forming of valve guides 40. Roller apertures 32 may be formed either by machining or in-die piercing. Preferably, roller apertures 32 are formed after pinch forming valve guides 40. Outer curved, or peripheral, surfaces 28, 128, 228, or 528 may be completely curved, have straight portions, or include straight portions intersecting at predetermined angles.

While the invention has been described with respect to specific examples including preferred modes of carrying out the invention, those skilled in the art will appreciate that there are numerous variations and permutations of the above described systems and techniques that fall within the scope of the invention as set forth in the appended claims. For example, while valve guides are illustrated, another form of the guides may also be useful at the pivot end.

## Claims

1. A method for manufacturing a cam-engaged rocker comprising:
providing an article (310), the article defined, at least in part, by a body defined in part by a first surface (326) and an opposing second surface (324), the first surface having a projection (340) that extends from the body, the article (310) further having a valve end (314) and a pivot end (316), wherein the article contains a predetermined amount of a metal; and
displacing a portion of the metal between the first surface (326) and the opposing second surface (324) to form a valve guide (40), wherein the valve guide is formed from metal that includes at least a portion of the projection (340), and the valve guide (40) is defined at least by an inboard surface (42) and an outboard surface (44),
**characterized in that** for displacing said portion of the metal, the article (310) is positioned in a die (400) including a center post (402) and a pair of cams (404) each having a shaving edge (410), and the metal is shaved by the cams (404) toward said center post (402).

2. The method of Claim 1, further comprising:
stamping the article by exerting a force on a metal blank (110) through a stamping die having a cavity, wherein the stamping die is positioned adjacent the article such that the cavity is adjacent the metallic surface at the valve end (114), and the cavity is adapted to permit a portion of the article to increase in thickness, such that the projection (240, 340) is formed by the plastic flow of metal into the cavity, and wherein the force is exerted through an outer curved or peripheral surface.

3. The method of Claim 2, wherein stamping the metal blank (110) includes exerting a force in a predetermined direction, and the flow of the metal is generally perpendicular to the predetermined direction.

4. The method of Claim 1, 2 or 3, further comprising pinch forming the projection (340) to create at least one valve guide (40).

5. The method of claim 4, wherein pinch forming includes a force in a predetermined direction, and pinch forming results in an additional material thickness, wherein the additional material thickness is measured generally perpendicular to the predetermined direction.

6. The method of Claim 4, wherein pinch forming includes shaving material between the two opposing surfaces (124, 126), wherein the shaved material is directed to form at least a portion of the valve guide (40), and a shaved area (A) is created.

7. The method of Claim 6, wherein a thickness of the rocker arm (10), as measured between the shaved area (A) and an opposing surface (24), is greater than a minimum required thickness.

8. The method of Claim 6, wherein pinch forming further includes directing the projection (340) to form at least a portion of the valve guide (40).

9. The method of Claim 4, wherein pinch forming further includes pinching a predetermined amount of material between said cam (404) and said center post (402).

10. The method of manufacturing a cam-engaged rocker according to Claim 1, comprising:
obtaining a metal blank (110), the blank defined, at least in part, by two opposing surfaces (124, 126) and an outer peripheral surface (128), the blank having a generally uniform thickness (T) as measured between the two opposing surfaces (124, 126), wherein the two opposing surfaces each generally lie within a defined plane, the blank (110) further having a valve end (114), a pivot end (116), and at least one ear (140) adjacent the valve end, wherein the ear defines a predetermined portion of the metal blank (110) extending between the two opposing surfaces (124, 126), and the outer peripheral surface (128) defines, in part, an outline of the ear (140); and
stamping the metal blank (110) using a stamping die having a pair of cavities to produce the article (210), wherein the stamping die is positioned adjacent the metal blank (110) such that the cavities are adjacent one of the two opposing surfaces (124, 126) at the valve end (114), and the cavities selectively permit portions of the valve end (114) of the blank (110) to increase in thickness as the blank is stamped, such that the at least one ear (140) is pressed inward into the valve end (114) and a pair of projections (240) are formed by the flow of a portion of the metal into the cavities while retaining the cross-sectional thickness (T) between the two opposing surfaces (124, 126), wherein the volume of the pair of projections (240) is substantially equal to the volume of the at least one ear (140), and an outline of the intermediate article (210) is substantially equal to the outline of the metal blank (110) without the ear (140).

11. The method of Claim 10, wherein stamping the metal blank (110) includes exerting a force in a predetermined direction, and the plastic flow of the portion of the metal is generally perpendicular to the predetermined direction.

12. The method of Claim 10, further comprising pinch forming the projections (240) to create two valve guides (40).

13. The method of Claim 12, wherein pinch forming includes exerting a force in a predetermined direction, and pinch forming results in an additional flow of a portion of the metal to form each valve guide (40) with a predetermined height (H), the flow being plastic flow, and wherein the predetermined height (H) is measured generally perpendicular to the predetermined direction.

14. The method of Claim 12, wherein pinch forming includes shaving material located between the two opposing surfaces (24, 26), wherein the shaved material is directed to form at least a portion of each valve guide (40), and a shaved area (A) is created.

15. The method of Claim 14, wherein a thickness of the rocker arm, as measured between the shaved area (A) and an opposing surface (24), is greater than a minimum required thickness.

16. The method of Claim 14, wherein pinch forming further includes directing the projections (240) to form at least a portion of each valve guide (40).

17. The method of Claim 12, wherein pinch forming further includes pinching a predetermined amount of material between said pair of cams (404) and the center post (402).

18. The method of any one of claims 10 to 17, wherein there are pair of valve guides (40), and there is a separate ear (140; 540) for each valve guide.

## Patentansprüche

1. Verfahren zum Herstellen eines Nocken-betätigten Kipphebels umfassend:
Bereitstellen eines Gegenstands (310), wobei der Gegenstand zumindest teilweise durch einen Körper definiert wird, der teilweise durch eine erste Oberfläche (326) und eine gegenüberliegende zweite Oberfläche (324) definiert wird, wobei die erste Oberfläche eine Ausformung (340) aufweist, welche sich von dem Körper erstreckt, wobei der Gegenstand (310) weiterhin ein Ventilende (314) und ein Verschwenkende (316) aufweist, wobei der Gegenstand eine vorbestimmte Menge an Metall enthält; und
Verschieben eines Teils des Metalls zwischen der ersten Oberfläche (326) und der gegenüberliegenden zweiten Oberfläche (324), um eine Ventilführung (40) auszubilden, wobei die Ventilführung aus Metall geformt ist, das zumindest einen Teil der Ausformung (340) einschließt, und wobei die Ventilführung (40) zumindest durch eine Innenoberfläche (42) und eine Außenoberfläche (44) definiert ist,
**dadurch gekennzeichnet, dass** zum Verschieben des Teils des Metalls der Gegenstand (310) in einem Werkzeug (400) mit einem zentralen Pfosten (402) und einem Paar von Nocken (404) angeordnet wird, die jeweils eine Schabekante (410) aufweisen, und wobei das Metall durch die Nocken in Richtung des zentralen Pfostens (402) geschabt wird.

2. Verfahren nach Anspruch 1, weiterhin umfassend:
Stempeln des Gegenstands durch Ausüben einer Kraft auf einen Metallrohling (110) durch ein Stempelwerkzeug mit einer Kavität, wobei das Stempelwerkzeug nahe dem Gegenstand positioniert ist, so dass die Kavität nahe bei der metallischen Oberfläche an dem Ventilende (114) ist, und wobei die Kavität angepasst ist, um es einem Teil des Gegenstands zu ermöglichen, in der Dicke zuzunehmen, so dass die Ausformung (240, 340) durch das plastische Fließen von Metall in die Kavität geformt wird und wobei die Kraft durch eine äußere gekrümmte oder Umfangsoberfläche ausgeübt wird.

3. Verfahren nach Anspruch 2, wobei das Stempeln des Metallrohlings (110) einschließt: Ausüben einer Kraft in einer vorbestimmten Richtung, und wobei der Fluss des Metalls im Wesentlichen senkrecht zu der vorbestimmten Richtung ist.

4. Verfahren nach Anspruch 1, 2 oder 3, das weiterhin ein Pinch-Formen der Ausformung (340) umfasst, um zumindest eine Ventilführung (40) zu erzeugen.

5. Verfahren nach Anspruch 4, wobei das Pinch-Formen eine Kraft in einer vorbestimmten Richtung einschließt und wobei das Pinch-Formen in einer zusätzlichen Materialdicke resultiert, wobei die zusätzliche Materialdicke im Wesentlichen senkrecht zu der vorbestimmten Richtung gemessen ist.

6. Verfahren nach Anspruch 4, wobei das Pinch-Formen ein Schaben von Material zwischen den zwei gegenüberliegenden Oberflächen (124, 126) einschließt, wobei das geschabte Material geführt wird, um zumindest einen Teil der Ventilführung (40) zu bilden und wobei eine geschabter Bereich (A) erzeugt wird.

7. Verfahren nach Anspruch 6, wobei eine Dicke des Kipphebelarms (10) gemessen zwischen dem geschabten Bereich (A) und einer gegenüberliegenden Oberfläche (24) größer ist als eine minimale benötigte Dicke.

8. Verfahren nach Anspruch 6, wobei das Pinch-Formen weiterhin ein Führen der Ausformung (340) einschließt, um zumindest einen Teil der Ventilführung (40) zu bilden.

9. Verfahren nach Anspruch 4, wobei das Pinch-Formen weiterhin ein Pinchen einer vorbestimmten Menge von Material zwischen der Nocke (404) und dem zentralen Pfosten (402) einschließt.

10. Verfahren zum Herstellen eines Nocken-betätigten Kipphebels nach Anspruch 1, umfassend:
Erhalten eines Metallrohlings (110), wobei der Metallrohling zumindest teilweise durch zwei gegenüberliegende Oberflächen (124, 126) und eine äußere periphere Oberfläche (128) definiert ist, wobei der Rohling eine im Wesentlichen einheitliche Dicke (T) gemessen zwischen den zwei gegenüberliegenden Oberflächen (124, 126) aufweist, wobei die zwei gegenüberliegenden Oberflächen beide im Wesentlichen innerhalb einer definierten Ebene liegen, der Rohling (110) weiterhin ein Ventilende (114), ein Verschwenkende (116) und zumindest ein Ohr (140) nahe bei dem Ventilende aufweist, wobei das Ohr einen vorbestimmten Teil des Metallrohlings (110) definiert, der sich zwischen den zwei gegenüberliegenden Oberflächen (124, 126) erstreckt, und wobei die äußere periphere Oberfläche (128) teilweise einen Umriss des Ohres (140) definiert; und
Stempeln des Metallrohlings (110) unter Verwendung eines Stempelwerkzeugs mit einem Paar von Kavitäten, um den Gegenstand (210) zu Erzeugen, wobei das Stempelwerkzeug benachbart zu dem Metallrohling (110) positioniert ist, so dass die Kavitäten nahe bei einer der beiden gegenüberliegenden Oberflächen (124, 126) an dem Ventilende (114) sind und wobei die Kavitäten es gezielt Teilen des Ventilendes (114) des Rohlings (110) erlauben, in der Dicke zuzunehmen, während der Rohling gestempelt wird, so dass das zumindest eine Ohr (140) nach innen in das Ventilende (114) gepresst wird und ein Paar von Ausformungen (240) durch den Fluss eines Teils des Metalls in die Kavitäten geformt werden, während die Querschnittsdicke (T) zwischen den beiden gegenüberliegenden Oberflächen (124, 126) aufrechterhalten wird, wobei das Volumen des Paars von Ausformungen (240) im Wesentlichen gleich dem Volumen des zumindest einen Ohres (140) ist und wobei ein Umriss des Zwischengegenstands (210) im Wesentlichen gleich dem Umriss des Metallrohlings (110) ohne das Ohr (140) ist.

11. Verfahren nach Anspruch 10, wobei das Stempeln des Metallrohlings (110) ein Ausüben einer Kraft in einer vorbestimmten Richtung einschließt und wobei der plastische Fluss des Teils des Metalls im Wesentlichen senkrecht zu der vorbestimmten Richtung ist.

12. Verfahren nach Anspruch 10, weiterhin umfassend ein Pinch-Formen der Ausformungen (240), um zwei Ventilführungen (40) zu erzeugen.

13. Verfahren nach Anspruch 12, wobei das Pinch-Formen ein Ausüben einer Kraft in einer vorbestimmten Richtung einschließt und wobei das Pinch-Formen in einem zusätzlichen Fluss eines Teils des Metalls resultiert, um jede Ventilführung (40) mit einer vorbestimmten Höhe (H) zu formen, wobei der Fluss ein plastischer Fluss ist und wobei die vorbestimmte Höhe (H) im Wesentlichen senkrecht zu der vorbestimmten Richtung gemessen wird.

14. Verfahren nach Anspruch 12, wobei das Pinch-Formen ein Schaben von Material einschließt, das zwischen den zwei gegenüberliegenden Oberflächen (24, 26) angeordnet ist, wobei das geschabte Material geführt wird, um zumindest einen Teil von jeder der Ventilführungen (40) zu bilden und wobei ein geschabter Bereich (A) erzeugt wird.

15. Verfahren nach Anspruch 14, wobei eine Dicke des Kipphebelarmes, gemessen zwischen dem geschabten Bereich (A) und einer gegenüberliegenden Oberfläche (24) größer ist als eine minimal benötigte Dicke.

16. Verfahren nach Anspruch 14, wobei das Pinch-Formen weiterhin ein Leiten der Ausformungen (240) einschließt, um zumindest einen Teil von jeder der Ventilführungen (40) zu formen.

17. Verfahren nach Anspruch 12, wobei das Pinch-Formen weiterhin ein Pinchen einer vorbestimmten Menge von Material zwischen dem Paar von Nocken (404) und dem zentralen Pfosten (402) einschließt.

18. Verfahren nach einem der Ansprüche 10 bis 17, wobei ein Paar von Ventilführungen (40) vorhanden ist und wobei ein separates Ohr (140, 540) für jede Ventilführung vorhanden ist.

## Revendications

1. Procédé pour fabriquer un culbuteur mis en prise par came comprenant les étapes consistant à :
prévoir un article (310), l'article étant défini au moins en partie par un corps défini en partie par une première surface (326) et une seconde surface opposée (324), la première surface ayant une saillie (340) qui s'étend à partir du corps, l'article (310) ayant en outre une extrémité de soupape (314) et une extrémité de pivot (316), dans lequel l'article contient une quantité prédéterminée d'un métal ; et
déplacer une partie du métal entre la première surface (326) et la seconde surface opposée (324) pour former un guide de soupape (40), dans lequel le guide de soupape est formé à partir d'un métal qui comprend au moins une partie de la saillie (340), et le guide de soupape (40) est défini au moins par une surface interne (42) et une surface externe (44),
**caractérisé en ce que** pour le déplacement de ladite partie de métal, l'article (310) est positionné dans un moule (400) comprenant un montant central (402) et une paire de cames (404), chacune ayant un bord d'ébavurage (410), et le métal est ébavuré par les cames (404) vers ledit montant central (402).

2. Procédé selon la revendication 1, comprenant en outre les étapes consistant à :
emboutir l'article en exerçant une force sur une ébauche de métal (110) par le biais d'un moule d'emboutissage ayant une cavité, dans lequel le moule d'emboutissage est positionné de manière adjacente à l'article de sorte que la cavité est adjacente à la surface métallique au niveau de l'extrémité de soupape (114), et la cavité est adaptée pour permettre à une partie de l'article d'augmenter du point de vue de l'épaisseur, de sorte que la saillie (240, 340) est formée par l'écoulement plastique du métal dans la cavité, et dans lequel la force est exercée à travers une surface incurvée externe ou périphérique.

3. Procédé selon la revendication 2, dans lequel l'emboutissage de l'ébauche de métal (110) comprend l'étape consistant à exercer une force dans une direction prédéterminée, et l'écoulement du métal est généralement perpendiculaire à la direction prédéterminée.

4. Procédé selon la revendication 1, 2 ou 3, comprenant en outre la formation à la pince de la saillie (340) pour créer au moins un guide de soupape (40).

5. Procédé selon la revendication 4, dans lequel la formation à la pince comprend une force dans une direction prédéterminée, et la formation à la pince se traduit par une épaisseur de matériau supplémentaire, et dans lequel l'épaisseur de matériau supplémentaire est mesurée généralement perpendiculairement à la direction prédéterminée.

6. Procédé selon la revendication 4, dans lequel la formation à la pince comprend une étape consistant à ébavurer le matériau entre les deux surfaces opposées (124, 126), dans lequel le matériau ébavuré est dirigé pour former au moins une partie du guide de soupape (40), et une partie ébavurée (A) est créée.

7. Procédé selon la revendication 6, dans lequel une épaisseur du culbuteur (10), telle que mesurée entre la zone ébavurée (A) et une surface opposée (24) est supérieure à une épaisseur minimum requise.

8. Procédé selon la revendication 6, dans lequel la formation à la pince comprend en outre l'étape consistant à diriger la saillie (340) pour former au moins une partie du guide de soupape (40).

9. Procédé selon la revendication 4, dans lequel la formation à la pince comprend en outre l'étape consistant à pincer une quantité prédéterminée de matériau entre ladite came (404) et ledit montant central (402).

10. Procédé de fabrication d'un culbuteur mis en prise par came selon la revendication 1, comprenant les étapes consistant à :
obtenir une ébauche de métal (110), l'ébauche étant définie, au moins en partie, par deux surfaces opposées (124, 126) et une surface périphérique externe (128), l'ébauche ayant une épaisseur généralement uniforme (T) telle que mesurée entre les deux surfaces opposées (124, 126), dans lequel les deux surfaces opposées se trouvent généralement chacune dans un plan défini, l'ébauche (110) ayant en outre une extrémité de soupape (114), une extrémité de pivot (116), et au moins une oreille (140) adjacente à l'extrémité de soupape, dans lequel l'oreille définit une partie prédéterminée de l'ébauche de métal (110) s'étendant entre les deux surfaces opposées (124, 126), et la surface périphérique externe (128) définit en partie une disposition de l'oreille (140) ; et
emboutir l'ébauche de métal (110) en utilisant un moule d'emboutissage ayant une paire de cavités pour produire l'article (210), dans lequel le moule d'emboutissage est positionné de manière adjacente à l'ébauche de métal (110) de sorte que les cavités sont adjacentes à l'une des deux surfaces opposées (124, 126) au niveau de l'extrémité de soupape (114), et les cavités permettent sélectivement aux parties de l'extrémité de soupape (114) de l'ébauche (110) d'augmenter du point de vue de l'épaisseur lorsque l'ébauche est emboutie, de sorte que la au moins une oreille (140) est comprimée vers l'intérieur dans l'extrémité de soupape (114) et en forme une paire de saillies (240) par l'écoulement d'une partie du métal dans les cavités tout en conservant l'épaisseur transversale (T) entre les deux surfaces opposées (124, 126), dans lequel le volume de la paire de saillies (240) est sensiblement égal au volume de la au moins une oreille (140) et une disposition de l'article intermédiaire (210) est sensiblement égale à la disposition de l'ébauche de métal (110) sans l'oreille (140).

11. Procédé selon la revendication 10, dans lequel l'emboutissage de l'ébauche de métal (110) comprend l'étape consistant à exercer une force dans une direction prédéterminée, et l'écoulement plastique de la partie du métal est généralement perpendiculaire à la direction prédéterminée.

12. Procédé selon la revendication 10, comprenant en outre la formation à la pince des saillies (240) pour créer deux guides de soupape (40).

13. Procédé selon la revendication 12, dans lequel la formation à la pince comprend l'étape consistant à exercer une force dans une direction prédéterminée, et la formation à la pince se traduit par un écoulement supplémentaire d'une partie du métal pour former chaque guide de soupape (40) avec une hauteur prédéterminée (H), l'écoulement étant un écoulement plastique, et dans lequel la hauteur prédéterminée (H) est mesurée perpendiculairement à la direction prédéterminée.

14. Procédé selon la revendication 12, dans lequel la formation à la pince comprend l'étape consistant à ébavurer le matériau positionné entre les deux surfaces opposées (24, 26), dans lequel le matériau ébavuré est dirigé pour former au moins une partie de chaque guide de soupape (40), et une zone ébavurée (A) est créée.

15. Procédé selon la revendication 14, dans lequel une épaisseur du culbuteur, telle que mesurée entre la zone ébavurée (A) et une surface opposée (24), est supérieure à une épaisseur minimum requise.

16. Procédé selon la revendication 14, dans lequel la formation à la pince comprend en outre l'étape consistant à diriger les saillies (240) pour former au moins une partie de chaque guide de soupape (40).

17. Procédé selon la revendication 12, dans lequel la formation à la pince comprend en outre l'étape consistant à pincer une quantité prédéterminée de matériau entre ladite paire de cames (404) et un montant central (402).

18. Procédé selon l'une quelconque des revendications 10 à 17, dans lequel on trouve une paire de guides de soupape (40), et on trouve une oreille séparée (140 ; 540) pour chaque guide de soupape.
